**Europäisches Patentamt**

**European Patent Office**

**Office européen des brevets**

(19)

(11) Publication number : **0 227 935 B1**

## EUROPEAN PATENT SPECIFICATION

(12)

(45) Date of publication of patent specification :
**30.01.91 Bulletin 91/05**

(51) Int. Cl.⁵ : **F02B 23/10**

(21) Application number : **86116004.2**

(22) Date of filing : **18.11.86**

(54) Combustion chamber in internal combustion engine.

(30) Priority : **21.11.85 JP 259750/85**

(43) Date of publication of application :
**08.07.87 Bulletin 87/28**

(45) Publication of the grant of the patent :
**30.01.91 Bulletin 91/05**

(84) Designated Contracting States :
**DE FR GB IT SE**

(56) References cited :
**EP-A- 0 205 000**
**EP-A- 0 226 941**
**DE-A- 1 576 008**
**FR-A- 1 550 865**
**GB-A- 802 118**
**GB-A- 2 024 936**
**US-A- 3 144 008**
**PATENT ABSTRACTS OF JAPAN, vol. 10, no.**
**267 (M-516)[2323], 11th September 1986; &**
**JP-A-61 89 920 (ISUZU MOTORS LTD)**
**08-05-1986**

(56) References cited :
**PATENT ABSTRACTS OF JAPAN, vol. 11, no.**
**385 (M-651)[2832], 16th December 1987; &**
**JP-A-62 153 515 (ISUZU MOTORS LTD)**
**08-07-1987**
**PATENT ABSTRACTS OF JAPAN, vol. 11, no.**
**123 (M-581)[2570], 17th April 1987; & JP-A-61**
**265 322 (ISUZU MOTORS LTD) 25-11-1986**
**PATENT ABSTRACTS OF JAPAN, vol. 10, no.**
**200 (M-498)[2256], 12th July 1986; & JP-A-61 43**
**216 (ISUZU MOTORS LTD) 01-03-1986**
**PATENT ABSTRACTS OF JAPAN, vol. 9, no.**
**313 (M-437)[2036], 10th December 1985; &**
**JP-A-60 147 526 (FUJI JUKOGYO K.K.)**
**03-08-1985**

(73) Proprietor : **Isuzu Motors Limited**
**10-go, 22-ban, 6-chome, Minami-Ohi**
**Shinagawa-ku**
**Tokyo (JP)**

(72) Inventor : **Ishida, Shiro c/o Fujisawa Factory of**
**Isuzu Motors Ltd. 8, Tsuchidana**
**Fujisawa-shi Kanagawa (JP)**

(74) Representative : **Kraus, Walter, Dr. et al**
**Patentanwälte Kraus, Weisert & Partner**
**Thomas-Wimmer-Ring 15**
**D-8000 München 22 (DE)**

## Description

The present invention relates to a combustion chamber in an internal combustion engine, including:
a main combustion chamber recessed axially in a top portion of a piston ;
a subcombustion chamber recessed radially outwards on an upper edge side of said main combustion chamber, said sub-combustion chamber being contiguous to said main combustion chamber ;
an ignition means for accelerating ignition, said ignition means being disposed within said subcombustion chamber in a postion near a top dead center of said piston ; and
a fuel injecting nozzle means for atomizing and supplying fuel into said main combustion chamber and said subcombustion chamber.

The combustion chamber in an internal combustion engine to which the invention relates, permits the use of not only gas oil but also volatile fuel oils and low cetane number fuel oils. More particularly, it is concerned with a combustion chamber in an internal combustion engine in which the improvement of engine starting performance and that of low load driving performance are intended.

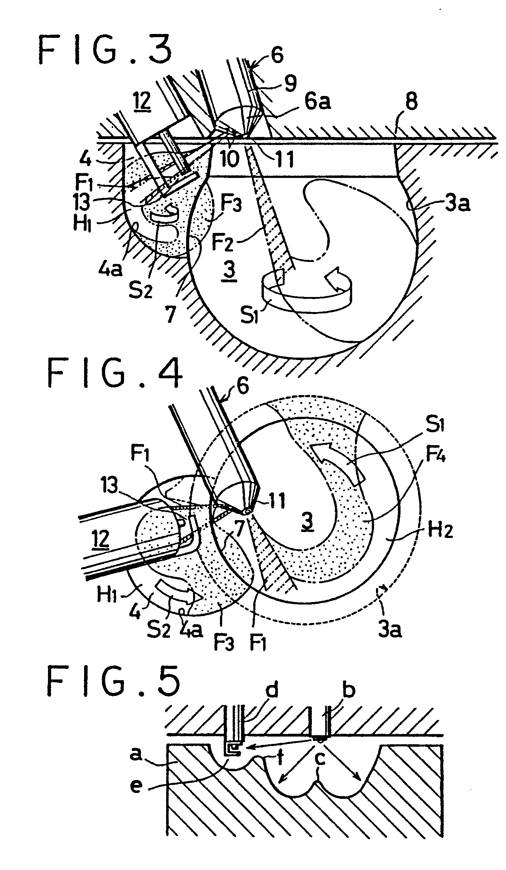

As a combustion chamber for the combustion of fuel oils, e.g. gas oil, there is known the combustion in Diesel engine described in Japanese Utility Model Laid Open No. 150702/79. In this conventional combustion chamber structure, as shown in Fig. 5 of the accompanying drawing, a main combustion chamber (c) in which is inserted a fuel injection nozzle (b), and a sub combustion chamber (e) in which is inserted an auxiliary firing device (d), are formed in communication with each other in a piston (a), and a protuberant portion (f) is formed at the portion of communication between both combustion chambers (c) and (e).

In the above construction, the main and the sub combustion chamber are communicated with each other in view of the difficulty of disposing both the fuel injection nozzle and the auxiliary firing device in such a manner as to face the interior of a single combustion chamber. According to such a construction there are attained freedom of layout and protection of the auxiliary firing device from heat load.

However, the above conventional construction involves the following drawbacks when viewed from the standpoint of combustibility.

The fuel injection nozzle used therein injects fuel into the main and sub combustion chambers independently of load and the number of revolutions, and it has a plurality of nozzle holes as shown in Fig. 5. Therefore, in the condition of low revolution and low load, including idling of the engine, the air-fuel mixture in the sub combustion chamber which mainly functions to effect fire nucleation becomes lean. As a result, the mixture is difficult to fire even when ignition is made by the auxiliary firing device.

Further, there is a fear of misfire because of poor fire propagation.

The above problems are involved in the use of gas oil as fuel. In the case of using fuels of a low cetane number, namely, volatile fuel oils such as gasoline and alcohol, fuel oil injected into the subcombustion chamber is diffused into the main combustion chamber because of its thinness, resulting in that the mixture in the subcombustion chamber becomes still leaner. One means for solving this problem may be throttling of intake air, but the resulting increase in pumping of the engine leads to the loss of output performance and deterioration of the fuel economy. Thus, such means is not considered to be a good solution under the circumstances it has been desired to develop a combustion chamber superior in combustion characteristic.

Furthermore, a combustion chamber in an internal combustion engine of the type mentioned in the beginning is known from FR-A-1 550 865. Like the above discussed combustion chamber disclosed in Japanese Utility Model Laid Open No. 150702/79 there is formed a protuberant portion, or web, at the portion of communication between the main combustion chamber and the subcombustion chamber of FR-A 1 550 865. This protuberant portion, or web, hinders the flame propagation from the sub-combustion chamber to the main combustion chamber. Thus, there is a fear of misfire because of poor fire propagation.

Moreover, US-A 3 144 008 discloses a combustion chamber in an internal combustion engine consisting of two or more individual recesses in the top portion of the piston, which recesses are contiguous to each other.

As in the above discussed combustion chambers of Japanese Utility Model Laid Open No. 150 702/79 and FR-A 1 550 865 there is formed a protuberant portion, or web, between each contiguous recesses of the combustion chamber of US-A 3 144 008 which therefore has also the disadvantages of hindered flame propagation between the recesses and fear of misfire.

The basic idea of the combustion chamber of US-A 3 144 008 is to form different shapes of individual recesses in order to control the course of the combustion. All these recesses serve as main combustion chambers.

It is the object of the present invention to provide a combustion chamber in an internal combustion engine capable of satisfying the following requirements.

(1) Not only gas oil but also volatile fuels of low cetane number such as gasoline and alcohol should be employable in all load conditions including an engine standing load.

(2) During combustion, it should be possible to suppress the formation of unburnt matter and suppress the increase of noises and vibrations.

(3) It should be possible to obtain combustability equal or superior to that in gasoline engines in both output performance and fuel economy.

This object is achieved with a combustion chamber in an internal combustion engine of the type mentioned in the beginning which is characterized in that the depth of said combustion chamber is reduced radially outward, such that there is no protruberant portion or web at the interface between the main and sub-combustion chambers.

Preferably this combustion chamber is desinged such that the fuel injecting nozzle means has a main nozzle means for atomizing and supplying fuel into said main combustion chamber and a sub-nozzle means for atomizing ans supplying fuel into said sub-combustion chamber.

The operation in the above construction will now be described. In a light load condition, fuel of a low cetane number is supplied in atomized state into the subcombustion chamber from the sub nozzle holes. Since the subcombustion chamber is smaller in capacity than the main combustion chamber, the mixture therein becomes richer and a rapid combustion is effected even at this stage. In medium and high load conditions, fuel larger in particle diameter than that atomized from the subnozzle means is injected from the main nozzle means. The fuel mist thus injected is evaporated by a high temperature heat of the wall surface and that of compressed air. The thus-evaporated fuel mixes with air and the mixture is burnt under flame propagation by heat energy and flame formed in the subcombustion chamber. As a result, there is obtained a combustion performance in which the delay of firing and the formation of bluish white smoke and noises are greatly reduced.

## BRIEF DESCRIPTION OF THE DRAWINGS

Fig. 1 is a schematic longitudinal sectional view of a combustion chamber in an internal combustion engine according to a preferred embodiment of the present invention ;

Fig. 2 is a plan view thereof ;

Figs. 3 and 4 are schematic sectional view and plan view, respectively, showing fuel sprays and fuel vapor layers ; and

Fig. 5 is a schematic longitudinal sectional view showing a conventional combustion chamber structure in Diesel engine.

## DESCRIPTION OF A PREFERRED EMBODIMENT

A preferred embodiment of the combustion chamber in an internal combustion engine of the present invention will be described hereinunder with reference to the accompanying drawings.

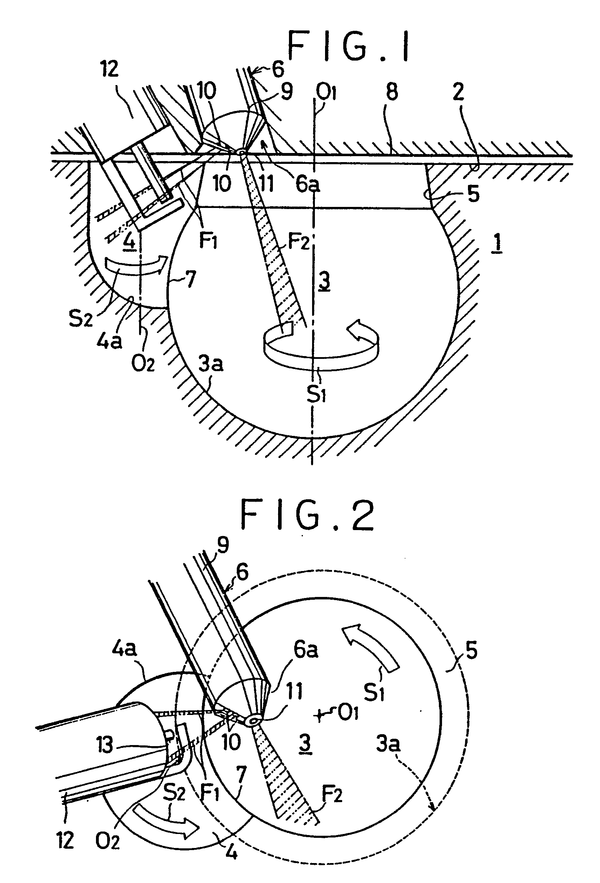

In Figs. 1 and 2, the reference numeral 1 denotes a piston disposed reciprocatably in and along a cylinder (not shown) of an internal combustion engine ; the numeral 2 denotes a piston top which forms a top surface of the piston 1 ; and numerals 3 and 4 denote a main combustion chamber and a sub combustion chamber, respectively.

As shown in Figs. 1 and 2, the main combustion chamber 3 is recessed in the piston top 2 in an axial direction of the piston 1. Further recessed in the piston top 2 is the sub combustion chamber 4 in a radially outward position with respect to the main combustion chamber 3. In this embodiment, a vertical section of the main combustion chamber 3 passing through an axis $O_1$ of the piston 1 is in the form of a truncated circle. Transverse sections of the main combustion chamber 3 and sub combustion chamber 4 perpendicular to the axial direction of the piston 1 are both circular.

As to the depth of the recesses, the sub combustion chamber 4 is shallower than the main combustion chamber 3. And the sub combustion chamber 4 is smaller in capacity than the main combustion chamber 3.

An inner peripheral wall 3a of the main combustion chamber 3 and an inner peripheral wall 4a of the sub combustion chamber 4 are radially open at the respective portions positioned between both combustion chambers. This opening serves as a communication port 7 for connection of both combustion chambers in a contiguous manner. The communication port 7 is formed by drawing an axis $O_2$ of the sub combustion chamber 4 close to the axis $O_1$ of the main combustion chamber 3. The degree of lap of the sub combustion chamber 4 with respect to the main combustion chamber 3 increases with increase of the approach, and the opening area of the communication port 7 is determined according to the said degree of lap.

Thus, the sub combustion chamber 4 is formed contiguously on an upper side of the main combustion 3, and rotating currents of air for combustion are supplied into the combustion chambers 3 and 4 to form independent swirls $S_1$ and $S_2$ in the chambers 3 and 4, respectively.

The upper portion of the main combustion chamber 3 extending in the circumferential direction projects radially inwards to an appropriate extent to throttle the upper opening of the main combustion chamber 3 and this throttled portion indicated by the numeral 5 creates a squish current which is forced into the main combustion chamber 3.

In the vicinity of the communication port 7 between the main combustion chamber 3 and the sub combustion chamber 4 there is provided a fuel injecting nozzle means 6 facing the port 7. The fuel injecting nozzle means 6 is enclosed in a cylinder head 8 so that a nozzle hole side 6a thereof faces the combustion chamber side. The nozzle means 6 is composed principally of a nozzle body 9 enclosed in the cylinder head 8, a needle valve (not shown) which is vertically movable with respect to a valve seat (not shown) provided in the nozzle body 9, a plurality of sub nozzle holes 10 formed through the valve seat, and a main nozzle hole 11 which is opened and closed by a throttle portion of the needle valve. The said needle valve is lifted by a hydraulic fuel pressure provided from an injection pump (not shown). More specifically, when the lift value of the needle valve is below a predetermined lift value, the sub nozzle holes 10 are opened, while when the lift value is above the predetermined lift value, the main nozzle hole 11 is opened, and thus the fuel injecting nozzle means 6 is a so-called pintaux type nozzle means.

The sub nozzle holes 10 are each formed extremely small in diameter as compared with the main nozzle hole 11 so that upon opening thereof there is injected a fuel mist $F_1$ having a good ignitability in atomized state into fine particles. On the other hand, a fuel mist $F_2$ having a larger particle diameter than the fuel mist $F_1$ and superior in penetratability and diffusibility is injected from the main nozzle hole 1.

In this embodiment, moreover, an ignition means 12 constituted by a spark plug or the like is provided within the sub combustion chamber 4 so that an ignition part 13 thereof faces the interior of the sub combustion chamber 4. The sub nozzle holes 10 are so formed as to face both upstream and downstream sides of the swirl $S_2$ with the ignition part 13 put therebetween. Thus, the sub nozzle holes 13 are provided so that they face the vicinity of the ignition part 13 and are directed to the inner wall 4a of the sub ignition chamber 4. On the other hand, the main nozzle hole 11 is derected to the inner wall 3a of the main combustion chamber 3 and directed to a downstream side of the swirl $S_1$ which is formed within the main combustion chamber 3.

The operation of the present invention will be explained below with reference to the accompanying drawings.

As shown in Figs. 1 to 4, the swirls $S_1$ and $S_2$ supplied and formed from swirl ports (not shown) circle independently in the main and sub combustion chambers 3 and 4, respectively, by virtue of fluid inertia while being compressed.

At the time of the start-up of the engine or in a low load condition of the engine, the atomized fuel mist $F_1$ of a low cetane number is injected into the sub combustion chamber 4 from the sub nozzle holes 10 of the fuel injecting nozzle means 6. A portion of the thus-injected fuel mist $F_1$ is brought into impingement with the inner wall 4a of the sub combustion chamber 4, while the remaining portion thereof forms a fuel film $H_1$ which is allowed to flow along the inner wall 4a.

A portion of the injected fuel of low cetane number is evaporated in an instant by a high temperature heat of compressed air because of its small particle size and mixes with air to form a fuel vapor layer $F_3$ which is easy to fire and burn in the sub combustion chamber 4. The fuel film $H_1$ is evaporated by the heat of compressed air and the wall heat.

Therefore, upon ignition by the ignition means 12, the fuel vapor layer $F_3$ ignites and is burnt quickly. The resulting flame is propagated to the fuel film $H_1$ of the portion flowing and evaporated along the inner wall 4a of the sub combustion chamber 4, so that the fuel film $H_1$ is burnt. At the time of start-up of the engine at a low temperature, the ignitability of fuel for the operation of the ignition means 12 can be controlled by adjusting the air-fuel ratio.

Thus, since the finely pulverized fuel mist $F_1$ supplied from the sub nozzle holes 10 are directed to the inner wall 4a of the sub combustion chamber 4, a lot of fuel is distributed along the inner wall 4a. Further, the fuel portion distributed on the wall surface by the fired heat energy is gradually evaporated and burnt. The greater part of the combustion gas in the sub combustion chamber 4 is confined therein by the swirl $S_2$, so when the engine load is low, combustion is performed in the sub combustion chamber 4. Consequently, the combustion temperature in the chamber 4 rises and it becomes possible to suppress the formation of bluish while smoke and that of unburnt matter (HC). Thus, in a low load condition, an average combustion temperature in the sub combustion chamber 4 rises and so the formation of bluish white smoke and that of unburnt matter (HC) can be prevented.

When the engine load is high, atomized fuel or the fuel mist $F_2$ is injected also from the main nozzle hole 10 toward the inner wall 3a of the main combustion chamber 3 and toward the downstream side of the swirl $S_1$. As a result, a fuel film $H_2$ and a fuel vapor layer $F_4$ are formed in the main combustion chamber 3 in the same state as in the sub combustion chamber 4. At this time, a portion of the combustion gas in the sub combustion chamber 4 flows into the main combustion chamber 3, resulting in that flame is propagated to the fuel vapor layer $F_4$ in the main combustion chamber 3, whereby the fuel film $H_2$ in the chamber 3 is ignited and burnt. In this connection, because the fuel portion injected and atomized from the main nozzle hole 11 is larger in particle diameter than the fuel portion injected in atomized condition from the sub nozzle holes 10 and has a large penetratability and also because the volume of the fuel vapor layer $F_4$ formed by mixing of the fuel portion evaporated on stirring of the swirl $S_1$ with air is not excess, there is performed a slow combustion in the main combustion chamber 3. In other words, the heat generated upon firing of the fuel vapor layer $F_4$ causes the remaining fuel film $H_2$ to evaporate quickly and the resulting vapor burns slowly. Such a slow combustion is effected. In this way a rapid combustion in the main combustion chamber 3 is prevented, so that the increase of pressure in the main combustion chamber 3 is suppressed and consequently noises can be further diminished. Additionally, the fuel injecting nozzle means 6 is constructed so that the higher the load, the larger the amount of fuel injected from the main nozzle hole 11, more particularly, a maximum of 90% or more is injected in a high load condition of the engine. Consequently, the above action is attained surely and the fuel vapor layer $F_4$ and fuel film $H_2$ formed by the fuel mist $F_2$ are fired surely by the flame flowing into the main combustion chamber from the sub combustion chamber 4.

Although a low cetane number fuel has been used above as an example of fuel injected from the fuel injecting nozzle means 6, fuels of a high cetane number, e.g. gas oil, can also be burnt well according to the present invention.

## Claims

1. A combustion chamber in an internal combustion engine, including :
a main combustion chamber (3) recessed axially in a top portion (2) of a piston (1) ;
a sub-combustion chamber (4) recessed radially outwards on an upper edge side of said main combustion chamber (3), said sub-combustion chamber (4) being contiguous to said main combustion chamber (3) ;
an ignition means (12) for accelerating ignition, said ignition means (12) being disposed with said sub-combustion chamber (14) in a position near a top dead center of said piston (1) ; and
a fuel injecting nozzle means (6) for atomizing and supplying fuel ($F_1$, $F_2$) into said main combustion chamber (3) and said sub-combustion chamber (4) ;
**characterized** in that the depth of said combustion chamber is reduced radially outward, such that there is no protruberant portion or web at the interface between the main and sub-combustion chambers (3, 4).

2. A combustion chamber in an internal combustion engine according to claim 1, **characterized** in that said fuel injecting nozzle means (6) has a main nozzle means (11) for atomizing and supplying fuel ($F_2$) into said main combustion chamber (3) and a sub-nozzle means (10) for atomizing and supplying fuel ($F_1$) into said sub-combustion chamber (4).

3. A combustion chamber in an internal combustion engine according to claim 1, **characterized** in that said subcombustion chamber (4) is constituted by a recessed portion which becomes smaller in opening diameter gradually from an upper edge portion of said main combustion chamber (3) in a recessed direction of the main combustion chamber (3).

4. A combustion chamber in an internal combustion engine according to claim 1, **characterized** in that said subcombustion chamber (4) is smaller in capacity than said main combustion chamber (3).

5. A combustion chamber in an internal combustion engine according to claim 2, **characterized** in that said fuel injecting nozzle means (6) is constructed so that the subnozzle means (10) is opened for the injection of atomized fuel ($F_1$) when a lift value of a needle valve is below a predetermined lift value, while the main nozzle means (11) is opened for the injection of atomized fuel ($F_2$) when the lift value of the needle valve is above said predetermined lift value.

6. A combustion chamber in an internal combustion engine according to claim 1, **characterized** in that said ignition means (12) is constituted by a spark plug.

7. A combustion chamber in an internal combustion engine according to claim 1, **characterized** in that said main combustion chamber (3) has a throttled portion (5) formed by projecting an upper circumferential opening portion of the chamber (3) radially inwards.

## Ansprüche

1. Brennkammer in einer Brennkraftmaschine, umfassend :
eine Hauptbrennkammer (3), die axial in einem oberen Teil (2) eines Kolbens (1) ausgespart ist ;
eine Unterbrennkammer (4), die radial auswärts auf einer oberen Randseite der Hauptbrennkammer (3) ausgespart ist, wobei die Unterbrennkammer (4) anstoßend an die Hauptbrennkammer (3) ist ;
eine Zündeinrichtung (12) zum Beschleunigen der Zündung, wobei die Zündeinrichtung (12) bei der Unterbrennkammer (14) in einer Position in der Nähe des oberen Totpunkts des Kolbens (1) angeordnet ist; und
eine Kraftstoffeinspritzdüseneinrichtung (6) zum Zerstäuben und Zuführen von Kraftstoff ($F_1$, $F_2$) in die Hauptbrennkammer (3) und die Unterbrennkammer (4) ;
dadurch **gekennzeichnet**, daß die Tiefe der Brennkammer radial auswärts derart vermindert ist, daß kein vorstehender Teil oder Steg an der Grenzfläche zwischen der Haupt- und Unterbrennkammer (3, 4) ist.

2. Brennkammer in einer Brennkraftmaschine nach Anspruch 1, dadurch **gekennzeichnet**, daß die Kraftstoffeinspritzdüseneinrichtung (6) eine Hauptdüseneinrichtung (11) zum Zerstäuben und Zuführen von Kraftstoff ($F_2$) in die Hauptbrennkammer (3) und ein Unterdüseneinrichtung (10) zum Zerstäuben und Zuführen von Kraftstoff ($F_1$) in die Unterbrennkammer (4) hat.

3. Brennkammer in einer Brennkraftmaschine nach Anspruch 1, dadurch **gekennzeichnet**, daß die Unterbrennkammer (4) von einem ausgesparten Teil gebildet ist, der von einem oberen Randteil der Hauptbrennkammer (3) in einer Aussparungsrichtung der Hauptbrennkammer (3) im Öffnungsdurchmesser allmählich kleiner wird.

4. Brennkammer in einer Brennkraftmaschine nach Anspruch 1, dadurch **gekennzeichnet**, daß die Unterbrennkammer (4) in der Kapazität kleiner als die Hauptbrennkammer (3) ist.

5. Brennkammer in einer Brennkraftmaschine nach Anspruch 2, dadurch **gekennzeichnet**, daß die Kraftstoffeinspritzdüseneinrichtung (6) so konstruiert ist, daß die Unterdüseneinrichtung (10) für die Einspritzung von zerstäubtem Kraftstoff (F$_1$) geöffnet wird, wenn ein Anhebwert eines Nadelventils unter einem vorbestimmten Anhebwert ist, während die Hauptdüseneinrichtung (11) für die Einspritzung von zerstäubtem Kraftstoff (F$_2$) geöffnet wird, wenn der Anhebwert des Nadelventils über dem vorbestimmten Anhebwert ist.

6. Brennkammer in einer Brennkraftmaschine nach Anspruch 1, dadurch **gekennzeichnet**, daß die Zündeinrichtung (12) von einer Zündkerze gebildet ist.

7. Brennkammer in einer Brennkraftmaschine nach Anspruch 1, dadurch **gekennzeichnet**, daß die Hauptbrennkammer (3) einen gedrosselten Teil (5) hat, der durch Vorspringen eines oberen Umfangsöffnungsteils der Kammer (3) radial nach einwärts ausgebildet ist.

## Revendications

1. Chambre de combustion pour moteur à combustion interne, comprenant :
une chambre de combustion principale (3) creusée axialement dans une partie supérieure (2) d'un piston (1) ;
une chambre de combustion secondaire (4) creusée radialement vers l'extérieur sur un bord latéral supérieur de ladite chambre de combustion principale (3), ladite chambre de combustion secondaire (4) étant contiguë à la dite chambre de combustion principale (3) ;
un dispositif d'allumage (12) pour accélérer l'allumage, ledit dispositif d'allumage (12) étant placé dans ladite chambre de combustion secondaire (14) à une position proche du point mort haut dudit piston (1) ; et

des moyens d'injection de combustible (6) pour pulvériser et introduire le combustible (F$_1$, F$_2$) dans ladite chambre de combustion principale (3) et ladite chambre de combustion secondaire (4) ; caractérisée en ce que
la profondeur de ladite chambre de combustion est réduite radialement vers l'extérieur de sorte qu'il n'y a pas de protubérance ou de chicane à l'interface entre les chambres de combustion principale et secondaire (3, 4).

2. Chambre de combustion pour moteur à combustion interne suivant la revendication 1, caractérisée en ce que lesdits moyens d'injection de combustible (6) comprennent des moyens d'injection principaux (11) pour pulvériser et introduire du combustible (F$_2$) dans ladite chambre de combustion principale (3) et des moyens d'injection secondaires (10) pour pulvériser et introduire du combustible (F$_1$) dans ladite chambre de combustion secondaire (4).

3. Chambre de combustion pour moteur à combustion interne suivant la revendication 1, caractérisée en ce que ladite chambre de combustion secondaire (4) est constituée par une partie évidée qui diminue progressivement de diamètre d'ouverture à partir d'un bord supérieur de ladite chambre de combustion principale (3) dans une direction d'évidement de la chambre de combustion principale (3).

4. Chambre de combustion pour moteur à combustion interne suivant la revendication 1, caractérisée en ce que ladite chambre de combustion secondaire (4) est de capacité plus petite que celle de ladite chambre de combustion principale (3).

5. Chambre de combustion pour moteur à combustion interne suivant la revendication 2, caractérisée en ce que lesdits moyens d'injection de combustible (6) sont construits de sorte que les moyens d'injection secondaires (10) sont ouverts pour l'injection de combustible pulvérisé (F$_1$) lorsqu'une valeur de soulèvement d'un obturateur à aiguille est inférieure à une valeur de soulèvement prédéterminée, tandis que les moyens d'injection principaux (11) sont ouverts pour l'injection de combustible pulvérisé (F$_2$) lorsque la valeur de soulèvement de l'obturateur à aiguille est supérieure à ladite valeur de soulèvement prédéterminée.

6. Chambre de combustion pour moteur à combustion interne suivant la revendication 1, caractérisée en ce que ledit dispositif d'allumage (12) est constitué par une bougie à étincelle.

7. Chambre de combustion pour moteur à combustion interne suivant la revendication 1, caractérisée en ce que ladite chambre de combustion principale (3) comporte une partie étranglée (5) formée par la saillie d'une partie d'ouverture circonférentielle supérieure de la chambre (3), radialement vers l'intérieur.

# F I G . 1

# F I G . 2

# FIG.3

# FIG.4

# FIG.5